Europäisches Patentamt

European Patent Office

Office européen des brevets

(19)

(11) Numéro de publication : **0 041 887**
**B1**

(12) FASCICULE DE BREVET EUROPÉEN

(45) Date de publication du fascicule du brevet :
**18.01.84**

(51) Int. Cl.³ : **B 62 D 5/08**

(21) Numéro de dépôt : **81400875.1**

(22) Date de dépôt : **29.05.81**

(54) **Dispositif de distribution pour servomécanisme hydraulique à fonctionnement silencieux.**

(30) Priorité : **06.06.80 FR 8012604**

(43) Date de publication de la demande :
**16.12.81 Bulletin 81/50**

(45) Mention de la délivrance du brevet :
**18.01.84 Bulletin 84/03**

(84) Etats contractants désignés :
**DE FR GB IT**

(56) Documents cités :
**FR-A- 2 160 548**
**FR-A- 2 437 968**
**FR-A- 2 439 697**
**FR-A- 2 445 255**

(73) Titulaire : **SOCIETE ANONYME D.B.A.**
**Centre Paris Pleyel**
**F-93521 St-Denis Cedex 01 (FR)**

(72) Inventeur : **Kervagoret, Gilbert**
**5 impasse Nobleterre**
**F-95100 Argenteuil (FR)**

(74) Mandataire : **Le Moenner, Gabriel et al**
**SERVICE BREVETS BENDIX 44, Rue François 1er**
**F-75008 Paris (FR)**

EP 0 041 887 B1

## Dispositif de distribution pour servomécanisme hydraulique à fonctionnement silencieux

L'invention concerne un dispositif de distribution pour servomécanisme hydraulique, notamment une valve de distribution pour un système de direction assistée d'un véhicule automobile, et plus particulièrement un dispositif de distribution du type comportant deux éléments de distribution de fluide, cylindriques, coaxiaux et susceptibles d'une rotation relative limitée autour de leur axe commun, contre la force d'un moyen de rappel en position relative neutre et de part et d'autre de celle-ci, ces éléments de distribution comportant des ouvertures et cavités définissant un circuit de circulation de fluide entre une source de fluide et un réservoir de fluide, ce circuit comportant deux branches parallèles munies de passages à section variable opérant par recouvrement de surfaces cylindriques en contact desdits éléments de distribution et comportant notamment, dans chaque branche, deux types de passages à sens de variation d'ouverture inversés pour un sens quelconque de ladite rotation relative à partir de ladite position relative neutre, des passages de ces deux types étant montés en série entre ladite source de fluide et ledit réservoir et une portion de circuit entre ces passages des deux types communiquant avec une prise de pression de travail de la branche considérée. Un dispositif de ce type est décrit dans le document FR-A-2 439 697.

Le perfectionnement de l'invention vise à l'élimination des bruits de fonctionnement tels que les sifflements qui trouvent leur origine dans des phénomènes de cavitation.

Dans les systèmes de servo-direction à centre ouvert, dans lesquels le fluide hydraulique circule en permanence dans une valve de distribution branchée d'une part entre une source de fluide telle qu'une pompe et un réservoir ou bâche et, d'autre part, entre deux chambres de pression d'un moteur hydraulique mécaniquement couplé au système de direction du véhicule, on constate fréquemment des sifflements désagréables, intervenant au-delà d'un certain braquage des roues du véhicule. On sait que ces sifflements sont dus à l'apparition de phénomènes de cavitation, à partir d'un certain seuil de pression de fonctionnement, qui prennent naissance au voisinage de certains passages à ouverture variable définis dans la valve de distribution précitée et notamment celui ou ceux qui sont progressivement fermés au fur et à mesure du braquage (pour un sens de rotation donné de la colonne de direction) dans le but de provoquer une augmentation de pression dans la chambre de pression correspondante du moteur hydraulique précité. Ces phénomènes de cavitation ne sont pas gênants en eux-mêmes, dans la mesure où, compte tenu des relativement faibles pressions mises en jeu, l'érosion qu'ils pourraient provoquer sur les éléments du distributeur est tout à fait négligeable et interviendrait de toute façon en des zones non critiques. Il n'en reste pas moins vrai que les sifflements qu'ils provoquent sont de nature à irriter le conducteur, voire à créer un sentiment d'insécurité chez un non-spécialiste pouvant les attribuer à une défectuosité du système de direction et craindre de ce fait une défaillance de celui-ci.

L'invention découle de l'observation des phénomènes décrits ci-dessus et de la déduction logique selon laquelle il suffit d'éliminer l'apparition de la cavitation aux pressions critiques. Or, cette cavitation prend naissance lorsque, le fluide s'écoulant dans un passage à étranglement, de section de plus en plus réduite, la chute de pression ou perte de charge dans ce passage dépasse une certaine valeur de seuil, laquelle est par ailleurs d'autant plus élevée que la valeur de la pression résiduelle en aval de ce passage est elle-même plus élevée.

Le document FR-A-2 437 968 divulgue un procédé pour éliminer les sifflements dans un mécanisme de direction assistée hydraulique, consistant à créer un étranglement dans le conduit de retour du fluide, au moyen d'un piston différentiel disposé centralement dans la valve de distribution et sollicité par un ressort, pour y créer une pression dynamique diminuant la chute de pression aux arêtes de commande du circuit de retour.

Le document FR-A-2 160 548 décrit par ailleurs un dispositif de distribution pour machine à piston rotatif comprenant, disposés en parallèle, des passages de distribution de grandeurs différentes à ouverture variable dont la fermeture est décalée.

L'idée de base de l'invention consiste donc à proposer un agencement de valve de distribution du type défini plus haut, de construction simple et ramassée, avec une seconde restriction d'écoulement en aval d'un tel passage de distribution à étranglement pour créer une pression résiduelle suffisamment notable pour éliminer les risques de cavitation.

De façon plus précise, l'invention concerne donc un dispositif de distribution pour servomécanisme du type sus-mentionné, notamment pour direction assistée, caractérisé par deux passages d'un même type agencés dans chaque branche entre ladite prise de pression et ledit réservoir de fluide, respectivement un passage principal à fermeture prioritaire et un passage secondaire à fermeture ultérieure, ledit passage secondaire étant monté en série avec une restriction d'écoulement et l'ensemble dudit passage secondaire et de ladite restriction étant branché en dérivation sur ledit passage principal.

L'invention sera mieux comprise et d'autres avantages de celle-ci apparaîtront mieux à la lumière de la description qui va suivre, donnée uniquement à titre d'exemple et faite en référence aux dessins non limitatifs annexés dans lesquels :

La Figure 1 représente une vue générale en coupe partielle d'un dispositif formant valve de distribution, selon l'invention, pour un système de direction assistée de véhicule ;

La Figure 2 est un schéma illustrant le circuit hydraulique de ce système de direction assistée, utilisant la valve de distribution de la Figure 1 ;

La Figure 3 est une vue développée des deux éléments de distribution de la valve de la Figure 1 avec, sur la partie droite en considérant le dessin, une vue schématique en coupe de l'élément de distribution le plus externe coopérant avec le boîtier fixe de la valve auquel sont raccordés selon une représentation schématique, les autres parties du circuit hydraulique de la Figure 2 ; et

La Figure 4 est une section IV-IV de la Figure 3.

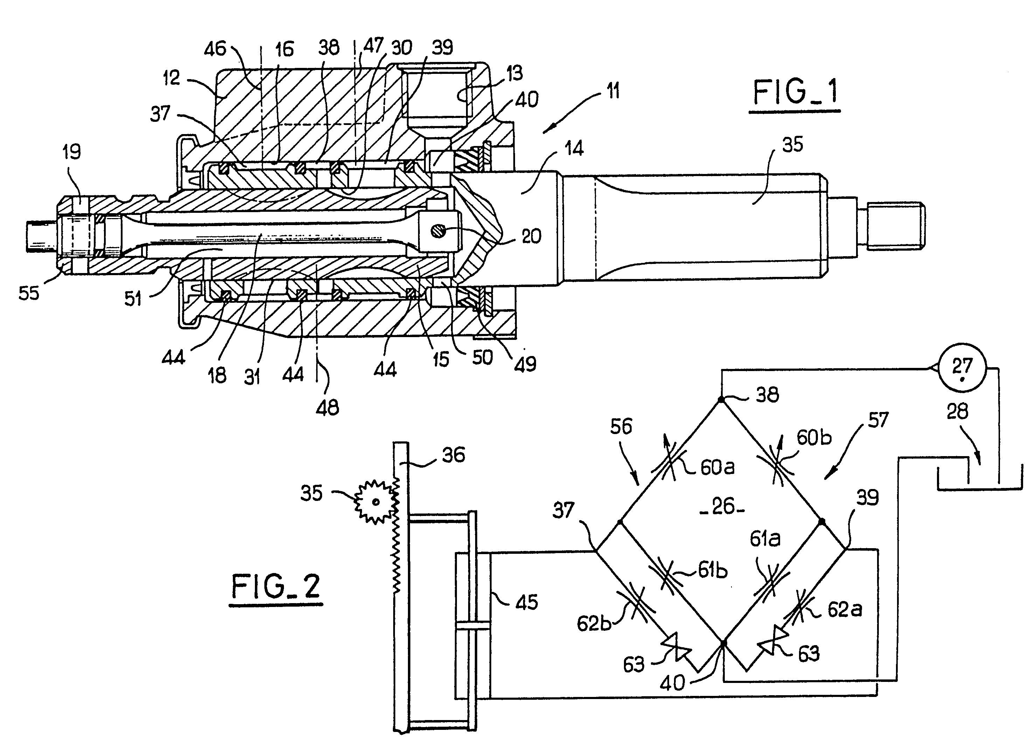

En se reportant à la Figure 1, le dispositif de distribution 11 selon l'invention comporte essentiellement un boîtier 12 fixe, muni d'embouts de raccordement tels que, par exemple, l'embout 13 et comportant un alésage 16 abritant deux éléments de distribution de fluide 14 et 15 cylindriques et coaxiaux, comportant chacun une partie en forme de manchon. De façon classique, l'élément de distribution 15, le plus interne, est guidé en rotation dans le manchon formé par l'élément de distribution 14, le plus externe, tandis que l'espace interne du manchon formé par l'élément de distribution 15 abrite une barre de torsion 18 connectée, par l'une de ses extrémités, à l'élément de distribution 14 par une goupille 19 et, par son autre extrémité, à l'élément de distribution 14 par une goupille 20. Cette barre de torsion constitue donc, de façon bien connue, un moyen de rappel en position relative neutre autorisant une rotation limitée, de quelques degrés, d'un élément de distribution par rapport à l'autre autour de leur axe commun (confondu avec celui de la barre de torsion 18) et de part et d'autre de ladite position relative neutre. En outre, les éléments de distribution comportent aussi des ouvertures et des cavités dont l'agencement complexe sera décrit plus en détail en référence aux Figures 2 à 4, et qui définissent un circuit de circulation de fluide 26 (voir Figure 2) entre une source de fluide telle qu'une pompe 27 et un réservoir de fluide 28. On notera seulement à ce stade de la description que les ouvertures et cavités précitées coopèrent pour former des passages à ouverture variable opérant par recouvrement des surfaces cylindriques en contact 30 et 31 des éléments de distribution 14 et 15, respectivement, lors d'une rotation relative limitée précitée. Le dispositif de distribution 11 étant plus particulièrement destiné à un système de direction assistée, le manchon externe formant l'élément de distribution 14 est prolongé par un arbre de sortie 35 destiné à être couplé, par exemple, à une crémaillère 36 (voir Figure 2) d'un mécanisme de direction de roues. Cet élément de distribution 14, appelé aussi stator, est guidé en rotation dans l'alésage 16 et comporte des gorges externes (37, 38, 39, 40) circulaires et adjacentes, dont les bords munis de joints d'étanchéité annulaires 44 coopèrent de façon étanche avec la surface de l'alésage 16 pour individualiser des parties du circuit de circulation de fluide et notamment deux prises de pression de travail, confondues avec les gorges 37 et 39 et destinées à être reliées aux deux chambres de pression d'un moteur hydraulique d'assistance tel qu'un vérin à double effet 45 (Figure 2) lié à la crémaillère 36. Les gorges 37 et 39 sont en communication avec le vérin 45 au moyen d'embouts de raccordement du boîtier 12, non visibles sur la Figure 1, mais symbolisés par les traits d'axes 46 et 47, respectivement. De façon analogue, la gorge 38 est raccordée à la sortie de la pompe 27 par un embout de raccordement du boîtier 12 symbolisé par le trait d'axe 48. La gorge 40 (délimitée à l'une de ses extrémités par un joint d'étanchéité 49) communique avec l'embout de raccordement 13 qui constitue la sortie de retour au réservoir 28. Des trous radiaux 50 dans l'élément 14 mettent la gorge 40 en communication avec l'espace interne 51 de l'élément de distribution 15, dans lequel est logée la barre de torsion 18. L'élément de distribution 15, le plus interne, est encore appelé rotor car il est destiné à être connecté par son extrémité axiale 55 à la colonne de direction, non représentée, d'un véhicule.

On va maintenant décrire le circuit de circulation de fluide 26 en référence aux Figures 2 à 4. De façon classique, ce circuit se compose essentiellement de deux branches parallèles 56, 57 munies des passages à ouverture variable précités. On distingue deux types de passage à sens de variation d'ouverture inversés pour un sens quelconque de ladite rotation relative à partir de la position relative neutre précitée des deux éléments de distribution 14 et 15. Dans cette position neutre, la barre de torsion 18 ne subit aucune contrainte. Dans la suite de la description, les passages de l'un ou l'autre type seront différenciés par des références numériques portant les indices « a » ou « b », respectivement. Ainsi, en référence à la Figure 2, on distingue un passage 60a dans la branche 56 connecté entre la gorge d'alimentation de fluide 38 et la prise de pression 37 et un passage 61a dans la branche 57, relié entre la prise de pression 39 et la gorge 40 de retour au réservoir. De façon analogue, un passage 60b, dans la branche 57 est connecté entre la gorge 38 et la prise de pression 39 tandis qu'un passage 61b dans la branche 56 est connecté entre la prise de pression 37 et la gorge 40. L'agencement des quatre passages 60a, 60b, 61a et 61b est classique pour tout système à centre ouvert ; chaque branche 56 ou 57 comportant ainsi des passages des deux types (indices « a » et « b ») montés en série entre la source de fluide (pompe 27) et le réservoir 28 et une portion de circuit entre ces passages de deux types communiquant avec une prise de pression (37, 39) de la branche (56, 57) considérée. Selon l'invention, on prévoit deux passages d'un même type (62a en plus de 61a et 62b en plus de 61b) dans chaque branche (57, 56 respectivement) entre la prise de pression correspondante (39, 37 respectivement) et le réservoir de fluide 28, c'est-à-dire en fait la rainure de liaison 40. De plus, les passages 62a et 62b sont respectivement en série avec des restrictions d'écoulement 63 à section d'écoulement constante. En outre, entre ces deux passages de même type, on distingue dans chaque branche un passage principal 61a ou 61b à fermeture prioritaire et un passage secondaire 62a ou 62b à fermeture ultérieure ; ce passage secondaire étant monté en série avec la restriction d'écoulement 63 correspondante et l'ensemble dudit passage secondaire et de ladite restriction étant ainsi branché en dérivation sur ledit passage principal. On entend par « passage à fermeture prioritaire » et « passage à fermeture ultérieure », le fait que ces passages sont agencés pour que ledit passage à fermeture prioritaire se ferme pour un angle de rotation relative des deux éléments de distribution plus faible que l'angle de rotation relative pour lequel on observe la fermeture du passage à fermeture ultérieure. Par ailleurs, selon une autre particularité de l'invention, les passages à fermeture prioritaire 61a et 61b ont des lois de fermeture, en fonction dudit angle de rotation relative, sensiblement analogues aux passages de même type 60a, 60b de sorte que, les passages 60a, 61a (respectivement 60b, 61b) se fermeront sensiblement simultanément ce qui aura pour conséquence, au-delà de l'angle de rotation relative où se produit cette fermeture, de faire passer tout le fluide délivré par la pompe 27 (supposée à débit sensiblement constant) à travers le passage 62a (respectivement 62b) et la restriction d'écoulement 63 correspondante. Il s'en suivra une perte de charge notable aux bornes de la restriction d'écoulement 63 concernée et la chute de pression entre la prise de pression 39 (respectivement 37) et le réservoir 28 sera partagée entre le passage 62a (respectivement 62b) et la restriction 63 de manière telle que les conditions de création du phénomène de cavitation (qui n'apparaît qu'à partir d'une certaine pression) ne seront réalisées ni pour ledit passage ni pour ladite restriction. De cette façon, le fonctionnement du dispositif reste silencieux sur toute la gamme de pression de manœuvre du vérin 45.

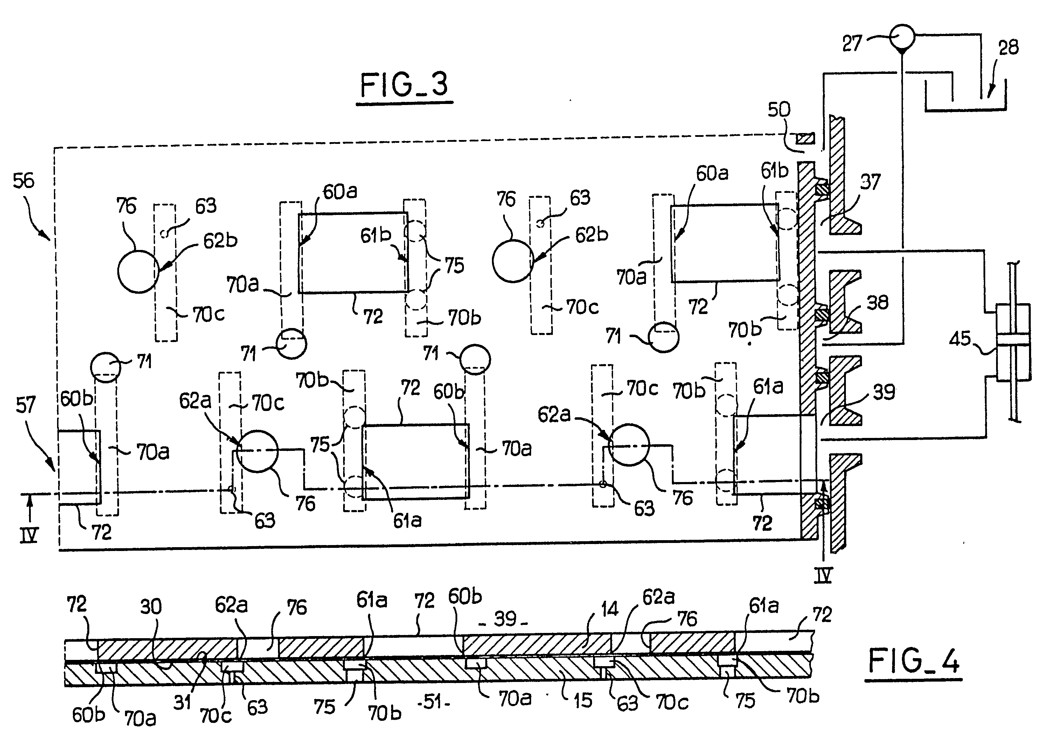

Les Figures 3 et 4 montrent comment sont réalisés les différents passages et restrictions d'écoulement constituant le circuit de circulation de fluide 26.

L'élément de distribution 14, formant stator, est muni de fenêtres pratiquées au fond des gorges 37, 38, 39 tandis que l'élément de distribution 15, formant rotor, est muni de deux séries de six rainures longitudinales 70 angulairement décalées de 60° les unes par rapport aux autres dans une même série et décalées de 30° d'une série à l'autre. Les bordures de ces rainures coopèrent avec les bordures des fenêtres précitées pour former tous les passages à ouverture variable définis ci-dessus et ces passages portent les mêmes références que sur la Figure 2. Ainsi, sur les Figures 3 et 4, les deux séries de rainures 70 apparaissent agencées suivant deux rangées et chaque rangée correspond à une branche 56 ou 57 du circuit de circulation de fluide 26. D'autre part, certaines rainures (70a) sont fermées, tandis que d'autres (70b, 70c) sont percées et communiquent ainsi avec l'espace interne 51 abritant la barre de torsion 18, c'est-à-dire, avec le réservoir 18. Les rainures fermées 70a sont en permanence en regard des fenêtres 71 de l'élément de distribution 14 pratiquées dans la gorge 38 en communication avec la pompe 27. Ces mêmes rainures 70a ont une bordure en regard d'une fenêtre rectangulaire 72 du stator communiquant avec l'une des gorges 37 ou 39, matérialisant ainsi les passages 60a pour la branche 56 et 60b pour la branche 57. Par ailleurs, les rainures 70b sont percées de larges orifices 75 permettant une communication sensiblement libre avec le réservoir 28 tandis que les rainures 70c ne sont percées que de très petits orifices qui constituent les restrictions d'écoulement 63 mentionnées ci-dessus. On comprend donc que les passages 61a, 61b seront formés en partie à partir des rainures 70b, tandis que les passages 62a, 62b seront formés en partie à partir des rainures 70c. Ainsi, on voit que chaque fenêtre rectangulaire 72 est commune à deux passages (60a, 61b ou 60b, 61a) à sens de variation d'ouverture inversés grâce à deux bordures rectilignes opposées coopérant respectivement avec une bordure d'une rainure fermée 70a et avec une bordure d'une rainure percée 70b. La largeur de la fenêtre 72 est pour cela supérieure à la distance séparant les deux bordures adjacentes des rainures 70a et 70b, ce qui correspond bien au mode de fonctionnement d'un dispositif de distribution dans une servodirection du type à centre ouvert.

Les passages secondaires 62a, 62b à fermeture ultérieure sont quant à eux matérialisés par d'autres fenêtres 76, circulaires, pratiquées dans les gorges 39, 37 respectivement, et coopérant avec les rainures 70c. On remarquera que le circuit de circulation de fluide 26, tel qu'il apparaît sur les Figures 3 et 4 est tel que tous ses passages 60, 61, 62 et ses restrictions d'écoulement 63 sont doublés par rapport au schéma de principe de la Figure 3 ; ceci notamment pour des raisons d'équilibrage statique du dispositif de distribution et pour simplifier la fabrication de la valve de distribution. Il est en effet intéressant de noter qu'avec l'agencement représenté sur les Figures 3 et 4, les fenêtres 72 et 76 sont deux à deux diamétralement opposées à la surface de l'élément de distribution 15 ; ce qui permet de les calibrer par brochage. Enfin, la réalisation technologique illustrée aux Figures 3 et 4 permet de distinguer aisément les passages à ouverture variable d'un même type (indices « a » ou « b ») dont les fenêtres (appartenant au stator) sont toujours du même côté par rapport aux rainures (appartenant au rotor) avec lesquelles elles coopèrent. Ainsi, en considérant la Figure 3, les passages 60a, 61a et 62a d'un même type ont tous leur fenêtre à droite de leur rainure tandis que les passages 60b, 61b et 62b de l'autre type ont tous leur fenêtre à gauche de leur rainure. Le fonctionnement du dispositif qui vient d'être décrit est le suivant.

Les éléments de distribution 14 et 15 ont, au repos (correspondant à une conduite en ligne droite du véhicule) la position relative illustrée aux Figures 3 et 4. Le fluide hydraulique délivré par la pompe 27 pénètre dans la gorge 38, passe par les fenêtres 71, les rainures 70a et retourne au réservoir par les rainures percées 70b et 70c. Aucune différence de pression n'est enregistrée entre les prises de pression constituées par les rainures 37 et 39 et le vérin 45 n'est donc pas actionné. Si le conducteur manœuvre le volant dans le sens des aiguilles d'une montre, c'est-à-dire le rotor 15 vers la droite en considérant les Figures 3 et 4, la réaction des roues du véhicule maintient tout d'abord le stator 14 de sorte qu'une rotation relative est engendrée entre les deux éléments de distribution, contre la force de la barre de torsion 18. Les passages 60b, 61b et 62b ont tendance à se refermer ce qui provoque une augmentation de pression dans la gorge 37 et le vérin 45 est actionné dans un sens correspondant au braquage souhaité. De façon bien connue, la pression d'actionnement du vérin augmente avec la rotation relative précitée, c'est-à-dire avec la fermeture des passages 61b et 62b. Pour un angle de rotation relative faible, l'essentiel de l'écoulement a lieu à travers les passages 61b. En revanche, ce passage se ferme avant la limite supérieure de ladite rotation relative pour un angle de rotation relative intermédiaire, au-delà duquel la chute de pression à travers ces seuls passages 61b deviendrait trop importante et risquerait de provoquer l'apparition du phénomène de cavitation. Dans la pratique, pour un débit constant de 7 litres par minute de la pompe 27, la chute de pression critique se situe autour de 8 à 10 bars. Lorsque les passages 61b se ferment complètement, le fluide passe alors à travers les passages 62b et les restrictions d'écoulement 63 et la chute de pression se trouve partagée entre eux par l'apparition d'une contre-pression notable en amont des restrictions 63. La pression d'actionnement du vérin 45 peut donc continuer à augmenter pour un angle de rotation relative croissant entre rotor et stator sans que la chute de pression dans les passages 62b ou dans les restrictions 63 atteigne la valeur de seuil critique mentionnée ci-dessus, cette valeur critique étant avantageusement dépendante de la contre-pression de sorte qu'une telle contre-pression de quelques bars suffit à repousser le seuil de fonctionnement bruyant à plusieurs dizaines de bars de pression en amont du passage à étranglement correspondant. Le bruit de fonctionnement est donc éliminé. Il est à noter en outre que la fermeture complète des passages 61b s'accompagne, pour des raisons de symétrie de construction, de la fermeture complète des passages 60b ce qui a pour conséquence que tout le débit de la pompe passe à travers les passages 62b et restrictions 63 correspondantes, ce qui augmente encore la valeur de la contre-pression dans ces restrictions. Un actionnement du rotor dans l'autre sens de rotation engendre les mêmes phénomènes par fermeture des passages 60a, 61a et 62a.

## Revendications

1. Dispositif de distribution pour servo-mécanique, notamment pour direction assistée, du type comportant deux éléments de distribution (14, 15) de fluide, cylindriques, coaxiaux et susceptibles d'une rotation relative limitée autour de leur axe commun, contre la force d'un moyen de rappel (18) en position relative neutre et de part et d'autre de celle-ci, ces éléments de distribution comportant des ouvertures et cavités définissant un circuit (26) de circulation de fluide entre une source de fluide (27) et un réservoir de fluide (28), ce circuit comportant deux branches parallèles (56, 57) munies de passages à section variable opérant par recouvrement de surfaces cylindriques en contact desdits éléments de distribution et comportant notamment, dans chaque branche, deux types (a, b) de passages à sens de variation d'ouverture inversés pour un sens quelconque de ladite rotation relative à partir de ladite position relative neutre, des passages de ces deux types étant montés en série entre ladite source de fluide et ledit réservoir et une portion de circuit entre ces passages des deux types communiquant avec une prise de pression de travail (37, 39) de la branche considérée ; caractérisé par deux passages d'un même type (61a-62a, 61b-62b) agencés dans chaque branche entre ladite prise de pression et ledit réservoir de fluide, respectivement un passage principal (61a, 61b) à fermeture prioritaire et un passage secondaire (62a, 62b) à fermeture ultérieure ; ledit passage secondaire étant monté en série avec une restriction d'écoulement (63) et l'ensemble dudit passage secondaire et de ladite restriction étant branché en dérivation sur ledit passage principal.

2. Dispositif selon la revendication 1, du type dans lequel les deux éléments de distribution sont constitués par deux manchons mécaniquement couplés par une barre de torsion (18) logée à l'intérieur du manchon le plus interne ; le manchon externe ou stator, lié à un arbre de sortie (35), étant guidé en rotation dans un alésage fixe (16) formant boîtier (12) et comportant des gorges externes délimitées éventuellement par des joints annulaires et dont les bords coopèrent de façon étanche avec la surface interne dudit boîtier pour individualiser des parties dudit circuit de circulation de fluide ; une gorge (38) communiquant notamment avec ladite source de fluide et deux autres gorges (37, 39) constituant les deux prises de pression précitées, tandis que le manchon interne ou rotor a son espace interne (51), abritant ladite barre de torsion, en communication avec ledit réservoir, ledit circuit de circulation de fluide étant par ailleurs matérialisé par des fenêtres (71, 72, 76) pratiquées au fond desdites gorges et par des rainures longitudinales (70) réparties en symétrie circulaire à la surface externe dudit rotor, caractérisé en ce que des rainures fermées (70a) dudit rotor sont en regard de fenêtres (71) dudit stator pratiquées dans ladite gorge (38) communiquant avec ladite source de fluide et ont au moins une bordure en regard d'une fenêtre dudit stator pratiquée dans une gorge communiquant avec une prise de pression précitée, tandis que des rainures (70b, 70c) percées dudit rotor, communiquant avec ledit espace interne, sont en regard de bordures de fenêtres (72, 76) dudit stator pratiquées dans lesdites autres gorges communiquant avec les prises de pression précitées ; la coopération desdites bordures et desdites rainures définissant les passages (60, 61, 62) précités.

3. Dispositif selon la revendication 2, caractérisé en ce qu'une fenêtre (72) pratiquée dans une gorge dudit stator communiquant avec une prise de pression est commune à deux passages (60, 61) à sens de variation d'ouverture inversés précités, grâce à deux bordures opposées de ladite fenêtre, coopérant respectivement avec une bordure d'une rainure fermée (70a) précitée et avec une bordure d'une rainure (70b) percée précitée.

4. Dispositif selon la revendication 3, caractérisé en ce que celui des deux passages (61a-61b) à fenêtre commune précités qui est défini par la coopération d'une bordure de ladite fenêtre et d'une bordure de cette rainure percée est le passage principal à fermeture prioritaire précité.

5. Dispositif selon la revendication 3 ou 4, caractérisé en ce que le passage secondaire (62a-62b) à fermeture ultérieure précité est matérialisé par une autre fenêtre (76) pratiquée dans ladite gorge (37, 39) dudit stator communiquant avec une prise de pression et coopérant avec une autre rainure (70c) percée dudit rotor et en ce que cette autre rainure percée communique avec ledit espace interne par un trou (63) de faible section matérialisant ladite restriction d'écoulement.

6. Dispositif selon la revendication 5, caractérisé en ce que ladite autre fenêtre (76) a un contour sensiblement circulaire.

7. Dispositif selon la revendication 3, caractérisé en ce que ladite fenêtre commune (72) est sensiblement rectangulaire.

## Claims

1. Distribution device for a hydraulic servo mechanism operating silently, particularly for a power steering mechanism, comprising two cylindrical fluid distributing elements arranged in coaxial relationship and adapted for limited relative rotation around their common axis in either sense with respect to a relative neutral position overcoming the force of biasing means (18), the distributing elements having orifices and cavities defining a fluid path (26) between a pressure fluid source (27) and a fluid reservoir (28), the fluid path including two parallel branches (56, 57) having variable section passage means operating via overlap of the contacting cylindrical surfaces of the distributing elements and having in first line, in each of the branches, two types (a, b) of passages showing opposite sense of cross-sectional variation when rotated out of the relative neutral position in either direction, the two passage means of said two types being connected in series between the pressure fluid source and the reservoir, the portion of the fluid path defined between the passage means of said two types communicating with a working pressure fluid tap (37, 39) of the respective branch ; characterized in that two passages of the same type (61a-61b, 62a-62b) are arranged in each branch between said pressure fluid tap and the fluid reservoir, i. e. principal passage means (61a, 61b) having priority closing characteristics viz. secondary passage means (62a, 62b) having posterior closing characteristics ; and in that said secondary passage means and a flow restricting element (63) are connected in series, said series connection formed by the secondary passage means and the flow restricting element being in turn shunted in parallel across the principal passage means.

2. The distribution device as in claim 1, wherein the two distributing elements are formed by two sleeves mechanically coupled by a torque rod (18) arranged in the interior of the innermost sleeve, the outer sleeve or stator connected to an output shaft (35) is guided in a stationary bore (16) for rotational movement, said stationary bore forming a housing (12), the stator being formed with exterior grooves eventually delimited by annular sealing rings, the edges of said grooves cooperating with the interior surface of said housing in fluid tight manner to define portions of said fluid path, a groove (38) notably communicates with the pressure fluid source and two further grooves (37, 39) forming the two pressure fluid taps, while the internal space (51) of the interior sleeve or rotor receiving the torque rod communicates with said reservoir, the fluid path besides being defined by windows (71, 72, 76) provided in the bottom of said grooves as well as by longitudinal grooves (70) being distributed on the external surface of said rotor showing circular symmetry, characterized in that closed grooves (70a) of said rotor are provided facing the windows (71) of the stator formed in said groove (38) communicating with the pressure fluid source, said closed grooves having at least one edge facing a window of the stator formed in a groove communicating with a pressure fluid tap, while grooves (70b, 70c) cut into the rotor and communicating with said internal face edges of windows (72, 76) of said stator formed in said other grooves communicate with said pressure fluid taps ; and in that said passage means (60, 61, 62) are formed by cooperation of said edges and said grooves.

3. The distribution device as in claim 2, characterized in that a window (72) formed in a groove of said stator communicating with a pressure fluid tap is common to said two passage means (60, 61) showing opposite sense of cross-sectional variation due to the fact that two opposing edges of said window cooperate with one edge of a closed groove (70a) and one edge of a cut groove (70b), respectively.

4. The distribution device as in claim 3, characterized in that the one of said two passage means (61a-61b) having a common window which is defined by cooperation of an edge of said window and an edge of said cut groove, represents said principal passage means having priority closing characteristics.

5. The distribution device in accordance with claim 3 or 4 characterized in that the secondary passage means (62a-62b) having posterior closing characteristics is defined by a further window (76) formed in said groove (37, 39) of said stator communicating with a pressure fluid tap and cooperating with a further groove (70c) cut into the rotor, and in that said further cut groove communicates with said internal space through a hole (63) of small cross-section representing said flow restricting element.

6. The distribution device as in claim 5, characterized in that said further window (76) is of essentially circular shape.

7. The distribution device as in claim 3, characterized in that the common window (72) is essentially rectangular.


**Ansprüche**

1. Verteilungseinrichtung für einen hydraulischen Servomechanismus mit geräuschlosem Betrieb, insbesondere für eine Servolenkung, mit zwei zylindrischen koaxialen Verteilungselementen (14, 15) für das Strömungsmittel, welche um ihre gemeinsame Achse um einen begrenzten Winkel gegeneinander entgegen der kraft eines Rückstellmittels in beiden Richtungen aus der relativen Neutralstellung heraus gegeneinander verdrehbar sind und welche Öffnungen und Hohlräume aufweisen, die einen Stromungsmittelweg (26) zwischen einer Druckmittelquelle (27) und einem Strömungsmittel-Vorratsbehälter (28) vorgeben, der zwei parallele Zweige (56, 57) mit variablen Querschnitt aufweisenden Passagen aufweist, die durch Überdeckung der in Berührung stehenden zylindrischen Oberflächen der Verteilungselemente erhalten werden, und der insbesondere in jedem Zweig zwei Typen von Passagen (a, b) mit gegensinniger Änderung der Öffnung beim Herausdrehen aus der relativen Neutralstellung heraus in beliebiger Drehrichtung aufweist, die in Reihe zwischen die Druckmittelquelle und den Vorratsbehälter geschaltet sind, wobei ein zwischen den beiden verschiedenen Typen zuzurechnenden Passagen liegender Abschnitt des Strömungsmittelweges mit einem Arbeitsdruckmittelabgriff (37, 39) des betrachteten Zweiges in Verbindung steht, dadurch gekennzeichnet, daß zwei Passagen ein- und desselben Typs (61a, 62a, 61b, 62b) in jedem der Zweige zwischen dem Arbeitsdruckmittelabgriff und dem Strömungsmittelvorratsbehälter vorgesehen sind, nämlich eine Hauptpassage (61a, 61b) mit vorrangigem Schließen und eine sekundäre Passage (62a, 62b) mit späterem Schließen ; und daß die sekundäre Passage in Reihe zu einem Strömungswiderstand (63) geschaltet ist und die Reihenschaltung aus der sekundären Passage und dem Strömungswiderstand zur Hauptpassage parallel geschaltet ist.

2. Verteilungseinrichtung nach Anspruch 1, bei welchem die beiden Verteilungselemente durch zwei Hülsen gebildet sind, die mechanisch durch einen Torsionsstab (18) gekoppelt sind, welcher im Inneren der am weitesten innen liegenden Hülse untergebracht ist ; wobei die außen liegende Hülse bzw. der Stator mit einer Abtriebswelle (35) verbunden ist und drehbar in einer ein Gehäuse (12) bildenden feststehenden Bohrung (16) angeordnet ist und außen liegende Nuten aufweist, die ggfs. durch Ringdichtungen begrenzt sind und deren Ränder strömungsmitteldicht mit der innen liegenden Oberfläche des Gehäuses zusammenarbeiten, um die Teile des Strömungsmittelweges vorzugeben ; wobei eine Nut insbesondere mit der Druckmittelquelle in Verbindung steht und die beiden anderen Nuten (37, 39) die vorgenannten Druckmittelabgriffe bilden, während die innen liegende Hülse bzw. der Rotor mit seinem den Torsionsstab schützend aufnehmenden Innenraum (51) in Verbindung mit dem Strömungsmittelvorratsbehälter steht, wobei der Strömungsmittelweg im übrigen durch im Boden der Nuten ausgebildete Fenster (71, 72) und durch in Längsrichtung verlaufende Nuten (70) gebildet ist, welch letztere in kreisförmiger Symmetrie auf der außen liegenden Oberfläche des Rotors ausgebildet sind, dadurch gekennzeichnet, daß die geschlossenen Nuten (70a) des Rotors den Fenstern (71) in der Nut (38) des Stators gegenüber liegen, die mit der Druckmittelquelle in Verbindung steht, und zumindest eine dem Fenster des Stators gegenüber liegende Kante haben, die in einer Nut ausgebildet ist, die mit einem vorgenannten Druckmittelabgriff in Verbindung steht, während die im Rotor ausgebildeten Nuten (70b, 70c), die mit dem Innenraum in Verbindung stehen, Kanten von Fenstern (72, 76) des Stators gegenüber liegen, die in den mit den genannten Druckmittelabgriffen in Verbindung stehenden anderen Nuten kommunizieren ; und daß durch Zusammenarbeiten der Kanten und Nuten die vorgenannten Passagen (60, 61, 62) vorgegeben sind.

3. Verteilungseinrichtung nach Anspruch 2, dadurch gekennzeichnet, daß ein Fenster (72), welches in der mit einem Druckmittelabgriff in Verbindung stehenden Nut des Stators ausgebildet ist, zwei Passagen (60, 61) mit gegensinniger Änderung der Öffnung gemeinsam ist, wozu zwei einander gegenüberliegende Kanten dieses Fensters mit einem Rand einer geschlossenen Nut (70a) bzw. einem Rand einer durchgebrochenen Nut (70b) zusammenarbeiten.

4. Verteilungseinrichtung nach Anspruch 3, dadurch gekennzeichnet, daß diejenige der beiden ein gemeinsames Fenster aufweisenden Passagen (61a, 61b), welche durch Zusammenarbeiten einer Kante des Fensters und eines Randes der durchgebrochenen Nut begrenzt ist, die vorgenannte Hauptpassage mit vorrangigem Schließen ist.

5. Verteilungseinrichtung nach Anspruch 3 oder 4, dadurch gekennzeichnet, daß die sekundäre Passage (62a, 62b) mit späterem Schließen durch ein anderes Fenster (76) realisiert ist, welches in der Nut (37, 39) des Stators ausgebildet ist, die mit einem Druckmittelabgriff in Strömungsverbindung steht, und mit einer anderen durchgebrochenen Nut (70c) des Rotors zusammenarbeitet, und daß die andere durchgebrochene Nut mit dem innen liegenden Raum durch ein geringen Querschnitt aufweisendes Loch (63) in Verbindung steht, welches den Strömungswiderstand darstellt.

6. Verteilungseinrichtung nach Anspruch 5, dadurch gekennzeichnet, daß das andere Fenster (76) eine im wesentlichen kreisförmige Kontur aufweist.

7. Verteilungseinrichtung nach Anspruch 3, dadurch gekennzeichnet, daß das gemeinsame Fenster (72) im wesentlichen rechteckig ist.

46  16  38  47  30  39

12  13

37  40

11

19  14  35

55  20

44  18  31  44  48  44  15  50  49

FIG_1

0 041 887

27

36  38

56  60b  57

35  60a

37  26  39

61a

45  61b

62b  62a

62b  63

FIG_2  63  40

28

## FIG_3

## FIG_4

0 041 887